(19) Europäisches Patentamt / European Patent Office / Office européen des brevets

(11) **EP 1 712 003 B1**

(12) **EUROPÄISCHE PATENTSCHRIFT**

(45) Veröffentlichungstag und Bekanntmachung des Hinweises auf die Patenterteilung:
**09.03.2016 Patentblatt 2016/10**

(51) Int Cl.:
*G01J 9/04* *(2006.01)*     *G01J 9/02* *(2006.01)*

(21) Anmeldenummer: **04804798.9**

(86) Internationale Anmeldenummer:
**PCT/EP2004/053438**

(22) Anmeldetag: **14.12.2004**

(87) Internationale Veröffentlichungsnummer:
**WO 2005/071844 (04.08.2005 Gazette 2005/31)**

(54) **ANSTEUERUNG FÜR EIN HETERODYN-INTERFEROMETER**

TRIGGERING OF A HETERODYNE INTERFEROMETER

EXCITATION D'UN INTERFEROMETRE HETERODYNE

(84) Benannte Vertragsstaaten:
**CH DE ES FR GB IT LI**

(30) Priorität: **27.01.2004 DE 102004004004**

(43) Veröffentlichungstag der Anmeldung:
**18.10.2006 Patentblatt 2006/42**

(73) Patentinhaber: **ROBERT BOSCH GMBH**
**70442 Stuttgart (DE)**

(72) Erfinder: **STEINLECHNER, Siegbert**
**71229 Leonberg (DE)**

(56) Entgegenhaltungen:
**WO-A-02/37684     US-A1- 2003 199 115**
**US-B1- 6 249 155**

EP 1 712 003 B1

**Beschreibung**

Stand der Technik

Die Erfindung betrifft Verfahren zum Ansteuern eines Heterodyn-Interferometers mit zwei in getrennten Lichtwegen angeordneten akustooptischen Modulatoren, einem Empfänger, welcher ein Analogsignal erzeugt, und einem nachgeschalteten A/D-Wandler, der das Analogsignal in ein Digitalsignal wandelt, bei dem der eine akustooptische Modulator mit einer Modulationsfrequenz $f_1$ und der andere akustooptische Modulator mit einer anderen Modulationsfrequenz $f_2$ angesteuert werden, die Differenz der Modulationsfrequenzen $f_1$ und $f_2$ eine Heterodynfrequenz $f_{Het}$ bildet und die Umwandlung des Analogsignals in das Digitalsignal im A/D-Wandler mit der Abtastfrequenz $f_a$ erfolgt.

Die Erfindung betrifft weiterhin eine Vorrichtung aus einer Ansteuereinrichtung und einem Heterodyn-Interferometer mit zwei in getrennten Lichtwegen angeordneten akustooptischen Modulatoren, einem Empfänger, welcher ein Analogsignal liefert, und einem nachgeschalteten A/D-Wandler zur Bildung eines Digitalsignals aus dem Analogsignal, wobei der eine akustooptische Modulator mit einer Modulationsfrequenz $f_1$ und der andere akustooptische Modulator mit einer anderen Modulationsfrequenz $f_2$ angesteuert ist, und die Differenz der Modulationsfrequenzen $f_1$ und $f_2$ einer Heterodynfrequenz $f_{Het}$ entspricht und für die Umwandlung des Analogsignals in das Digitalsignal eine Abtastfrequenz $f_a$ vorgesehen ist.

Heterodyn-Interferometer werden benutzt, um die durch einen optischen Phasenschieber verursachte Phasenverschiebung eines Lichtstrahls zu messen. Als optischer Phasenschieber kann beispielsweise die Länge einer optischen Umwegleitung fungieren, deren Länge zu messen ist. Heterodyn-Interferometer sind aus der Fachliteratur bereits hinreichend bekannt.

Bei einem Heterodyn-Interferometer wird der Strahl einer Lichtquelle, üblicherweise ein Laser, durch einen Strahlteiler auf zwei akustooptische Modulatoren geleitet. Die beiden akustooptische Modulatoren werden mit den Frequenzen $f_1$ und $f_2$, die typischerweise im MHz-Bereich liegen, angesteuert. Dabei werden die Lichtstrahlen am Ausgang der akustooptische Modulatoren um die entsprechende Frequenz gegenüber der Orginal-Lichtfrequenz verschoben.

Die beiden frequenzverschobenen Lichtstrahlen werden dann über Spiegel wieder einem Strahlteiler zugeführt und vereinigt, wobei einer der beiden Strahlen über einen optischen Phasenschieber verzögert wird. Dies kann durch Materialien geschehen, die die Phase des Lichts verschieben oder in denen die Lichtgeschwindigkeit des Lichts gegenüber Luft verringert ist. Eine weitere Ausführungsform kann vorsehen, dass durch weitere Spiegel das Licht umgelenkt wird und somit das Licht einen optischen Umweg laufen muss. Nachdem beide Lichtstrahlen durch den Strahlteiler, beispielsweise in Form eines halbdurchlässigen Spiegels, wieder vereinigt sind, wird das Licht einem Empfänger zugeführt, der einen Photodetektor und in der Regel einen Verstärker enthält.

Beide Lichtstrahlen interferieren und erzeugen im Empfänger eine Schwebungsfrequenz, die als Heterodynfrequenz $f_{Het}$ bezeichnet wird. Diese Frequenz berechnet sich nach

$$f_{Het} = \mid f_1 - f_2 \mid$$

Die Phase dieses Signals, bezogen auf die Phasenlage eines durch Mischung von $f_1$ mit $f_2$ gewonnenen elektrischen Signals der Frequenz $f_{Het}$, entspricht der Phasenverschiebung des optischen Phasenschiebers, die gemessen werden soll.

Das Analogsignal, welches am Ausgang des Empfängers zur Verfügung steht, wird einem nachfolgend angeordneten A/D-Wandler zugeführt, der ein Digitalsignal generiert. Die Umwandlung geschieht dabei mit einer Abtastrate der Frequenz $f_a$. Das Digitalsignal wird dann einer Auswerteeinheit zur Weiterverarbeitung zugeführt.

Bei den oben beschriebenen Heterodyn-Interferometern kann die Erzeugung der Frequenzen $f_1$, $f_2$ und $f_a$ im Betrieb zu starken Schwankungen der Heterodynfrequenz $f_{Het} = \mid f_1 - f_2 \mid$ führen, da die Oszillatoren zum einen mit der Temperatur und zum anderen über die Alterung einen Frequenzdrift aufweisen können. Weiterhin ist nachteilig, dass das die Austastfrequenz $f_a$ zur Heterodynfrequenz $f_{Het}$ nicht in einem ganzzahligen Verhältnis steht und zudem nicht konstant ist.

Aus US2003/0199115 A1 ist eine Ansteuereinrichtung zur Erzeugung von Modulationsfrequenzen in Kombination mit einem Heterodyn-Interferometer offenbart. Die Modulationsfrequenzen f1 und f2 sowie eine Abtastfrequenz f1-f2 zur Ansteuerung des Heterodyn-Interferometers werden durch einen Digital Synthesizer bereitgestellt. Dabei ist ein Ausgangssignal des Digital Synthesizer als "phase lock" zum restlichen System vorgesehen.

Es ist Aufgabe der Erfindung, ein Verfahren zur Ansteuerung eines Heterodyn-Interferometer bereitzustellen, das diese Nachteile nicht aufweist. Es ist weiterhin Aufgabe der Erfinding eine entsprechende Vorrichtung aus einer Ansteuereinrichtung eines Heterodyn-Interferometer bereitzustellen.

Vorteile der Erfindung

Die das Verfahren betreffende Aufgabe der Erfindung wird dadurch gelöst, dass zumindest zwei der Frequenzen aus den Modulationsfrequenzen $f_1$, $f_2$ und der Abtastfrequenz $f_a$ aus einer Grundfrequenz $f_{Quarz}$ eines gemeinsamen Oszillators gebildet werden. Hierdurch kann erreicht werden, dass ein festes Verhältnis der Modulationsfrequenzen eingehalten wird und diese sich nicht durch Alterung und Drift gegeneinander verschieben. Weiterhin kann hierdurch erreicht werden, dass die Abtastfrequenz $f_a$ in einem festen Phasenverhältnis zur Differenzfrequenz der Modulations-frequenzen $f_1$, $f_2$, der Heterodynfrequenz $f_{Het}$, steht. Die Messgenauigkeit wird erhöht, da die Abtastung unabhängig von Drift und Alterung bei konstanter Phase erfolgt.

Ferner werden die Modulationsfrequenzen $f_1$ und $f_2$ aus der Grundfrequenz $f_{Quarz}$ nach dem Verfahren der direkten digitalen Synthese (DDS) generiert, indem ein digitaler Akkumulator der Wortbreite N pro Taktimpuls des als Quarzoszillator mit der Grundfrequenz $f_{Quarz}$ ausgebildeten Oszillators um eine ganze Zahl Z inkrementiert wird. Dadurch kann die Bereitstellung der Signale kostengünstig rein digital erfolgen. Zudem können die Modulationsfrequenzen hiermit frei programmiert werden.

Werden die Modulationsfrequenzen $f_1$ und $f_2$ getrennt in separaten DDS-Einheiten aus der Grundfrequenz $f_{Quarz}$ generiert, können kommerziell erhältliche kostengünstige integrierte Schaltungen verwendet werden.

Eine besonders einfach zu realisierende Ausführungsform mit linearem Phasenverlauf sieht vor, dass durch das Inkrementieren des digitalen Akkumulators ein sägezahnförmiger Werteverlauf seines Inhaltes gebildet wird.

Eine für die Modulation der akustooptischen Modulatoren besonders geeignete reine sinusförmige Ansteuerung wird dadurch erreicht, dass der Werteverlauf im digitalen Akkumulator als Phasenwert einer Kosinus-Schwingung interpretiert wird, dass über eine in einem ROM abgelegte Tabelle und/oder algorithmische Verfahren aus dem Phasenwert ein Abtastwert einer Kosinus-Schwingung ermittelt wird und diese in einem analogen Tiefpassfilter geglättet wird.

Weiterhin sieht der Schaltungsaufbau der Erfindung vor, dass die Abtastfrequenz $f_a$ für den A/D-Wandler durch eine Teiler-Einheit aus der Modulationsfrequenz $f_1$ gebildet wird, oder dass die Abtastfrequenz $f_a$ für den A/D-Wandler durch eine Teiler-Einheit aus der Modulationsfrequenz $f_2$ gebildet wird, wodurch ein weiterer Oszillator eingespart werden kann.

Beträgt die Abtastfrequenz $f_a$ ein ganzzahliges Vielfaches der Heterodynfrequenz $f_{Het}$, wird eine Verbesserung der Messgenauigkeit erreicht.

Bildet das Verhältnis zwischen der Abtastfrequenz $f_a$ und der Heterodynfrequenz $f_{Het}$ mindestens den Faktor 2, wird eine gute Messgenauigkeit bei geringem Schaltungsaufwand erzielt.

Die die Vorrichtung betreffende Aufgabe der Erfindung wird dadurch gelöst, dass die Ansteuereinrichtung für die Erzeugung zumindest zweier der Frequenzen aus den Modulationsfrequenzen $f_1$, $f_2$ und der Abtastfrequenz $f_a$ einen gemeinsamen Oszillator mit der Grundfrequenz $f_{Quarz}$ aufweist. Hierdurch wird mit geringem Schaltungsaufwand eine von Drift und Bauteilalterung unabhängige Messgenauigkeit erreicht.

Erfindungsgemäß ist für die Erzeugung der Modulationsfrequenzen $f_1$ und $f_2$ aus der Grundfrequenz $f_{Quarz}$ ein direkter digitaler Synthesizer (DDS) vorgesehen, der einen digitalen Akkumulator der Wortbreite N aufweist, welcher pro Takteinheit des als Quarzoszillator ausgebildeten Oszillators (100) mit einer Taktfrequenz $f_{Quarz}$ mittels einer Inkrementierstufe um eine ganze Zahl Z inkrementierbar ist. Hierdurch können die Signale kostengünstig auf digitalem Weg erzeugt und frei programmiert werden.

Werden für die Erzeugung der Modulationsfrequenzen $f_1$ und $f_2$ getrennte DDS-Einheiten vorgesehen, können kostengünstige kommerziell erhältliche Bauteile eingesetzt werden.

Die Erfindung sieht eine vereinfachte Schaltungsausführung sieht vor, bei welcher eine Teiler-Einheit zur Er-zeugung der Abtastfrequenz $f_a$ aus der Modulationsfrequenz $f_1$ vorhanden ist oder bei welcher eine Teiler-Einheit zur Erzeugung der Abtastfrequenz $f_a$ aus der Modulationsfrequenz $f_2$ vorhanden ist.

Eine bevorzugte Ausführung sieht vor, dass das Teilungsverhältnis der Teiler-Einheit ganzzahlig ist. Hierdurch wird eine besonders gute Messgenauigkeit erzielt.

Eine einfache Ausführung mit guter Messgenauigkeit sieht vor, dass das Teilungsverhältnis der Teiler-Einheit mindestens 2 beträgt.

Zeichnungen

Die Erfindung wird im folgenden anhand eines in den Figuren dargestellten Ausführungsbeispiels näher erläutert. Es zeigen:

Figur 1 schematisch ein Heterodyn-Interferometer gemäß dem Stand der Technik;
Figur 2 schematisch eine Oszillator-Anordnung für ein Heterodyn-Interferometer;
Figur 3 schematisch eine andere Ausführungsform für eine Oszillator-Anordnung.

Beschreibung der Ausführungsbeispiele

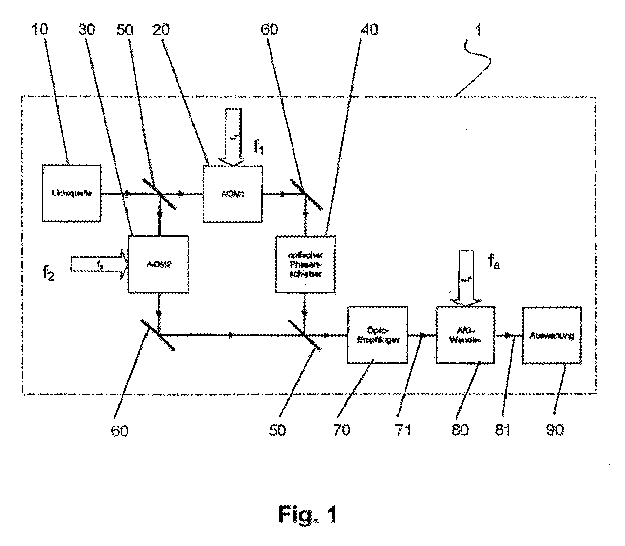

Fig. 1 zeigt schematisch ein Heterodyn-Interferometer 1, wie es aus dem Stand der Technik bekannt ist.

Der Strahl einer Lichtquelle 10 wird durch einen Strahlteiler 50 auf zwei akustooptische Modulatoren 20, 30, in der Figur mit AOM1 und AOM2 bezeichnet, geleitet. Die beiden akustooptische Modulatoren 20, 30 werden mit den Frequenzen $f_1$ und $f_2$, die typischerweise im MHz-Bereich liegen, angesteuert. Dabei werden die Lichtstrahlen am Ausgang der akustooptische Modulatoren 20, 30 um die entsprechende Frequenz gegenüber der Orginal-Lichtfrequenz verschoben. Als Lichtquelle 10 wird vorzugsweise ein Laser mit langer Kohärenzlänge verwendet. Die beiden frequenzverschobenen Lichtstrahlen werden dann über Spiegel 60 wieder einem Strahlteiler 50 zugeführt und vereinigt, wobei einer der beiden Strahlen über einen optischen Phasenschieber 40 verzögert wird. Dies kann durch Materialien geschehen, die die Phase des Lichts verschieben oder in denen die Lichtgeschwindigkeit des Lichts gegenüber Luft verringert ist. Eine weitere Ausführungsform kann vorsehen, dass durch weitere Spiegel das Licht umgelenkt wird und somit das Licht einen optischen Umweg laufen muss. Nachdem beide Lichtstrahlen durch den Strahlteiler 50, beispielsweise in Form eines halbdurchlässigen Spiegels, wieder vereinigt sind, wird das Licht einem Empfänger 70 zugeführt. Der Empfänger 70 ist durch einen Photodetektor ausgebildet, dem ein Verstärker nachgeschaltet ist, der ein Analogsignal 71 liefert. Der Verstärker kann im Empfänger 70 integriert sein.

Beide Lichtstrahlen interferieren und erzeugen im Empfänger 70 eine Schwebungsfrequenz, die als Heterodynfrequenz $f_{Het}$ bezeichnet wird. Diese Frequenz berechnet sich nach

$$f_{Het} = | f_1 - f_2 |$$

Die Phase dieses Signals, bezogen auf die Phasenlage eines durch Mischung von $f_1$ mit $f_2$ gewonnenen elektrischen Signals der Frequenz $f_{Het}$, entspricht der Phasenverschiebung des optischen Phasenschiebers 40, die gemessen werden soll.

Das Analogsignal 71, welches am Ausgang des Empfängers 70 zur Verfügung steht, wird einem nachfolgend angeordneten A/D-Wandler 80 zugeführt, der ein Digitalsignal 81 generiert. Die Umwandlung geschieht dabei mit einer Abtastrate der Frequenz $f_a$. Das Digitalsignal 81 wird dann einer Auswerteeinheit 90 zur Weiterverarbeitung zugeführt.

Dem Stand der Technik entsprechend, werden die Frequenzen $f_1$, $f_2$ und $f_a$ aus getrennten Quarzoszillatoren gewonnen, was die oben genannten Nachteile hinsichtlich der Stabilität der Frequenzverhältnisse zueinander aufweist.

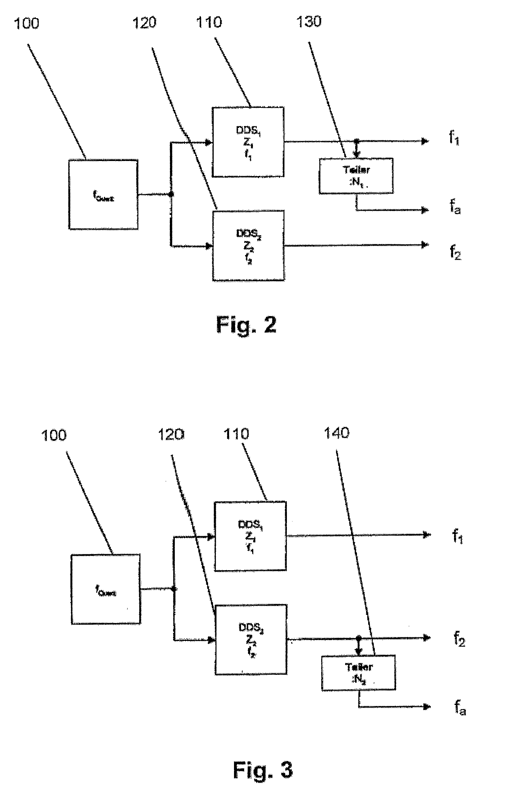

Fig. 2 zeigt einen Teil einer Oszillator-Anordnung für einen Heterodyn-Interferometer gemäß der Erfindung. Zur Erzeugung der AOM-Frequenzen $f_1$ und $f_2$ wird das als direkte digitale Synthese bekannte DDS-Verfahren eingesetzt. Bei diesem Verfahren wird ein digitaler Akkumulator der Wortbreite N pro Taktimpuls eines als Quarzoszillator ausgebildeten Oszillators 100 mit der Taktfrequenz $f_{Quarz}$ um eine ganze Zahl Z inkrementiert. Dabei läuft der Akkumulator durch das ständige Inkrementieren periodisch über. Der Werteverlauf im Akkumulator über die Zeit entspricht dabei einer Sägezahnfunktion mit dem Wertebereich 0 bis $2^N$ - 1 (N kann beispielsweise 32 sein). Die Werte im Akkumulator werden als Phasenwert

$$F = (2 * \pi * Z) / 2^N$$

einer Kosinus-Schwingung interpretiert. Über eine ROM-Tabelle und/oder über algorithmische Verfahren wird aus diesem Phasenwert ein Abtastwert cos (F) der Kosinus-Schwingung geformt. Dieser Abtastwert wird über einen D/A-Wandler ausgegeben und analog tiefpassgefiltert, wodurch sich ein zeitkontinuierliches kosinusförmiges Analogsignal der Frequenz

$$f = f_{Quarz} * Z / 2^N$$

ergibt.

An sich sind direkte digitale Synthesizer als integrierte Schaltung bekannt und bilden eine DDS-Einheit. Mit dieser integrierten Schaltung lassen sich mit einer Grundfrequenz per Programmierung kostengünstig hochgenaue Frequenzgeneratoren realisieren, die sich im Bereich von 0 bis ca 1/3 der Grundfrequenz mit hoher Auflösung durchstimmen lassen.

Die zwei AOM-Frequenzen $f_1$ und $f_2$ werden mittels zwei getrennten DDS-Einheiten 110, 120 erzeugt, wobei ein Inkrementwert $Z_1$ für die DDS-Einheit 110 und ein Inkrementwert $Z_2$ für die DDS-Einheiten 120 vorgegeben wird. Kennzeichnend ist weiterhin, dass die Grundfrequenz für beide DDS-Einheiten 110, 120 mittels eines gemeinsamen Oszillators 100 gebildet wird.

Für die AOM-Frequenzen $f_1$ und $f_2$, die Heterodynfrequenz $f_{Het}$ und die Inkrementwerte $Z_1$ und $Z_2$ ergeben sich folgende Gleichungen:

$$f_1 = f_{Quarz} * Z_1 / 2^N$$

$$f_2 = f_{Quarz} * Z_2 / 2^N$$

$$f_{Het} = |f_1 - f_2| = f_{Quarz} * (|Z_1 - Z_2|) / 2^N$$

Im gezeigten Ausführungsbeispiel wird die Abtastrate $f_a$ des A/D-Wandlers 80 durch direkte Teilung der Frequenz $f_1$ durch einen ganzzahligen Faktor $N_1$ gewonnen. Dies wird in einer beispielsweise integrierten Teilereinheit 130 realisiert.

Hinsichtlich der Genauigkeit der Abtastung beim A/D-Wandler 80 kann es vorteilhaft sein, wenn die Abtastrate $f_a$ genau das k-fache der Heterodynfrequenz $f_{Het}$ beträgt, wobei k eine ganze Zahl ist.

Damit ergibt sich folgende Gleichung:

$$f_a = k * f_{Het} = f_1 / N_1$$

Für den Teilfaktor $N_1$ ergibt sich demnach folgende Beziehung:

$$N_1 = \text{runden} \{f_1 / (k * f_{Het})\}$$

Da $Z_1$ ein ganzzahliges Vielfaches von $N_1 * k$ sein muss, ergibt sich für $Z_1$ folgende Beziehung:

$$Z_1 = k * N_1 * \text{runden} \{(2^N * f_1) / (k * N_1 * f_{Quarz})\}$$

Für $Z_2$ gilt dann:

$$Z_2 = Z_1 * \{1 + 1 / (k * N_1)\}$$

In einem Ausführungsbeispiel werden folgende Werte gewählt:

$$f_{Quarz} = 120 \text{ MHz},$$

$$f_1 = \text{ca. } 34{,}9 \text{ MHz und } f_2 = \text{ca. } 35{,}1 \text{ MHz und damit } f_{Het} = \text{ca. } 0{,}2 \text{ MHz},$$

$$k = 4$$

Diese werden erreicht mit N = 32 und $N_1$ = 44 durch Wahl von

$$Z_1 = 1249119696 \text{ und } Z_2 = 1256216967$$

Es ergibt sich somit für:

$$f_1 = 34{,}9000011 \text{ MHz und } f_2 = 35{,}0982966 \text{ MHz},$$

$$f_{Het} = 0{,}1982955 \text{ MHz und } f_a = 0{,}7931818 \text{ MHz}$$

In Fig. 3 ist eine erfindungsgemäße Ausführungsform einer Oszillator-Anordnung für einen Heterodyn-Interferometer aufgezeigt. Im Unterschied zu der in Fig. 2 dargestellten Ausführungsform wird die Abtastfrequenz $f_a$ mittels einer Teiler-Einheit 140 aus der Frequenz $f_2$ generiert Es ergeben sich analog zum oben beschriebenen Ausführungsbeispiel folgende Gleichungen:

$$f_a = k * f_{Het} = f_2 / N_2$$

$$N_2 = \text{runden } \{f_2 / (k * f_{Het})\}$$

$$Z_2 = k * N_2 * \text{runden } \{(2^N * f_2) / (k * N_2 * f_{Quarz})\}$$

$$Z_1 = Z_2 * \{1 - 1 / (k * N_2)\}$$

In diesem Ausführungsbeispiel werden folgende Werte gewählt:

$$f_{Quarz} = 120 \text{ MHz,}$$

$$f_1 = \text{ca. } 34{,}9 \text{ MHz und } f_2 = \text{ca. } 35{,}1 \text{ MHz und damit } f_{Het} = \text{ca. } 0{,}2 \text{ MHz,}$$

$$k = 4$$

Diese werden erreicht mit $N = 32$ und $N_2 = 44$ durch Wahl von

$$Z_1 = 1249140025 \text{ und } Z_2 = 1256277968$$

Es ergibt sich somit:

$$f_1 = 34{,}9005691 \text{ MHz und } f_2 = 35{,}1000009 \text{ MHz,}$$

$$f_{Het} = 0{,}1994318 \text{ MHz und } f_a = 0{,}7977273 \text{ MHz}$$

Insgesamt lassen sich mit den oben beschriebenen DDS-Einheiten kostengünstig entsprechende Frequenzen für Heterodyn-Interferometer realisieren, da hoch präzise Frequenzen generiert werden können, die eine besondere Frequenzstabilität ergeben, wie sie für bestimmte Messaufgaben von Vorteil sind.

**Patentansprüche**

1. Verfahren zum Ansteuern eines Heterodyn-Interferometers (1) mit zwei in getrennten Lichtwegen angeordneten akustooptischen Modulatoren (20, 30), einem Empfänger (70), welcher ein Analogsignal (71) erzeugt, und einem nachgeschalteten A/D-Wandler (80), der das Analogsignal (71) in ein Digitalsignal (81) wandelt, bei dem der eine akustooptische Modulator (20) mit einer Modulationsfrequenz $f_1$ und der andere akustooptische Modulator (30) mit einer anderen Modulationsfrequenz $f_2$ angesteuert werden, die Differenz der Modulationsfrequenzen $f_1$ und $f_2$ eine Heterodynfrequenz $f_{Het}$ bildet und die Umwandlung des Analogsignals (71) in das Digitalsignal (81) im A/D-Wandler (80) mit der Abtastfrequenz $f_a$ erfolgt, wobei zumindest zwei der Frequenzen aus den Modulationsfrequenzen $f_1$, $f_2$ und der Abtastfrequenz $f_a$ aus einer Grundfrequenz $f_{Quarz}$ eines gemeinsamen Oszillators (100) gebildet werden,

**dadurch gekennzeichnet, dass**
die Modulationsfrequenzen $f_1$ und $f_2$ aus der Grundfrequenz $f_{Quarz}$ nach dem Verfahren der direkten digitalen Synthese (DDS) generiert werden, indem ein digitaler Akkumulator der Wortbreite N pro Taktimpuls des als Quarzoszillator mit der Grundfrequenz $f_{Quarz}$ ausgebildeten Oszillators (100) um eine ganze Zahl Z inkrementiert wird, wobei die Abtastfrequenz $f_a$ für den A/D-Wandler (80) durch eine Teiler-Einheit (130) aus der Modulationsfrequenz $f_1$ gebildet wird, oder dass die Abtastfrequenz $f_a$ für den A/D-Wandler (80) durch eine Teiler-Einheit (120) aus der Modulationsfrequenz $f_2$ gebildet wird.

2. Verfahren nach Anspruch 1,
   **dadurch gekennzeichnet, dass**
   die Modulationsfrequenzen $f_1$ und $f_2$ getrennt in separaten DDS-Einheiten (110, 120) aus der Grundfrequenz $f_{Quarz}$ generiert werden.

3. Verfahren nach einem der Ansprüche 1 bis 2,
   **dadurch gekennzeichnet, dass**
   durch das Inkrementieren des digitalen Akkumulators ein sägezahnförmiger Werteverlauf seines Inhaltes gebildet wird.

4. Verfahren nach einem der Ansprüche 1 bis 3,
   **dadurch gekennzeichnet, dass**
   der Werteverlauf im digitalen Akkumulator als Phasenwert einer Kosinus-Schwingung interpretiert wird, über eine in einem ROM abgelegte Tabelle und/oder algorithmische Verfahren aus dem Phasenwert ein Abtastwert einer Kosinus-Schwingung ermittelt wird und diese in einem analogen Tiefpassfilter geglättet wird.

5. Verfahren nach einem der Ansprüche 1 bis 4,
   **dadurch gekennzeichnet, dass**
   die Abtastfrequenz $f_a$ ein ganzzahliges Vielfaches der Heterodynfrequenz $f_{Het}$ beträgt.

6. Verfahren nach Anspruch 5,
   **dadurch gekennzeichnet, dass**
   das Verhältnis zwischen der Abtastfrequenz $f_a$ und der Heterodynfrequenz $f_{Het}$ mindestens den Faktor 2 bildet.

7. Vorrichtung aus einer Ansteuereinrichtung eines Heterodyn-Interferometers (1) mit zwei in getrennten Lichtwegen angeordneten akustooptischen Modulatoren (20,30), einem Empfänger (70), welcher ein Analogsignal (71) liefert, und einem nachgeschalteten A/D-Wandler (80) zur Bildung eines Digitalsignals (81) aus dem Analogsignal (71), wobei der eine akustooptische Modulator (20) mit einer Modulationsfrequenz $f_1$ und der andere akustooptische Modulator (30) mit einer anderen Modulationsfrequenz $f_2$ angesteuert ist, und die Differenz der Modulationsfrequenzen $f_1$ und $f_2$ einer Heterodynfrequenz $f_{Het}$ entspricht und für die Umwandlung des Analogsignals (71) in das Digitalsignal (81) eine Abtastfrequenz $f_a$ vorgesehen ist, wobei die Ansteuereinrichtung zur Erzeugung zumindest zweier der Frequenzen aus den Modulationsfrequenzen $f_1$, $f_2$ und der Abtastfrequenz $f_a$ einen gemeinsamen Oszillator mit der Grundfrequenz $f_{Quarz}$ aufweist und für die Erzeugung der Modulationsfrequenzen $f_1$ und $f_2$ aus der Grundfrequenz $f_{Quarz}$ einen direkten digitalen Synthesizer (DDS), der einen digitalen Akkumulator der Wortbreite N aufweist, welcher pro Takteinheit des als Quarzoszillator ausgebildeten Oszillators (100) mit einer Taktfrequenz $f_{Quarz}$ mittels einer Inkrementierstufe um eine ganze Zahl Z inkrementierbar ist, **dadurch gekennzeichnet, dass** eine Teiler-Einheit (130) zur Erzeugung der Abtastfrequenz $f_a$ aus der Modulationsfrequenz $f_1$ vorhanden ist oder dass eine Teiler-Einheit (140) zur Erzeugung der Abtastfrequenz $f_a$ aus der Modulationsfrequenz $f_2$ vorhanden ist.

8. Ansteuereinrichtung nach Anspruch 7,
   **dadurch gekennzeichnet, dass**
   für die Erzeugung der Modulationsfrequenzen $f_1$ und $f_2$ getrennte DDS-Einheiten (110, 120) vorgesehen sind.

9. Ansteuereinrichtung nach einem der Ansprüche 7 oder 8,
   **dadurch gekennzeichnet, dass**
   das Teilungsverhältnis der Teiler-Einheit (130, 140) ganzzahlig ist.

10. Vorrichtung nach Anspruch 9,
    **dadurch gekennzeichnet, dass**
    das Teilungsverhältnis der Teiler-Einheit (130, 140) mindestens 2 beträgt.

11. Verwendung einer Ansteuereinrichtung gemäß den Ansprüchen 7 bis 10 in einem Heterodyn-Interferometer (1) mit zwei in getrennten Lichtwegen angeordneten akustooptischen Modulatoren (20, 30), einem Empfänger (70), welcher ein Analogsignal (71) liefert, und einem nachgeschalteten A/D-Wandler (80) zur Bildung eines Digitalsignals aus dem Analogsignal, wobei der eine akustooptische Modulator (20) mit der Modulationsfrequenz $f_1$ und der andere akustooptische Modulator (30) mit der Modulationsfrequenz $f_2$ angesteuert ist, und die Differenz der Modulations-frequenzen $f_1$ und $f_2$ einer Heterodynfrequenz $f_{Het}$ entspricht und für die Umwandlung des Analogsignals (71) in das Digitalsignal (81) eine Abtastfrequenz $f_a$ vorgesehen ist

**Claims**

1. Method for controlling a heterodyne interferometer (1) having two acousto-optical modulators (20, 30) arranged in separate light paths, a receiver (70) which generates an analogue signal (71), and a downstream A/D converter (80) which converts the analogue signal (71) into a digital signal (81), in which one acousto-optical modulator (20) is controlled at a modulation frequency $f_1$ and the other acousto-optical modulator (30) is controlled at another modulation frequency $f_2$, the difference between the modulation frequencies $f_1$ and $f_2$ forms a heterodyne frequency $f_{Het}$, and the analogue signal (71) is converted into the digital signal (81) in the A/D converter (80) at the sampling frequency $f_a$, at least two of the frequencies being formed from the modulation frequencies $f_1$, $f_2$ and the sampling frequency $f_a$ from a fundamental frequency $f_{Quarz}$ of a common oscillator (100),

   **characterized in that**

   the modulation frequencies $f_1$ and $f_2$ are generated from the fundamental frequency $f_{Quarz}$ according to the direct digital synthesis (DDS) method by virtue of a digital accumulator of the word width N being incremented by an integer Z for each clock pulse of the oscillator (100) in the form of a crystal oscillator with the fundamental frequency $f_{Quarz}$, the sampling frequency $f_a$ for the A/D converter (80) being formed from the modulation frequency $f_1$ by a divider unit (130), or **in that** the sampling frequency $f_a$ for the A/D converter (80) is formed from the modulation frequency $f_2$ by a divider unit (120).

2. Method according to Claim 1,

   **characterized in that**

   the modulation frequencies $f_1$ and $f_2$ are generated separately from the fundamental frequency $f_{Quarz}$ in separate DDS units (110, 120).

3. Method according to either of Claims 1 and 2,

   **characterized in that**

   as a result of the incrementation of the digital accumulator, a sawtooth-shaped value profile of its contents is formed.

4. Method according to one of Claims 1 to 3,

   **characterized in that**

   the value profile is interpreted in the digital accumulator as a phase value of a cosine oscillation, a sample of a cosine oscillation is determined from the phase value using a table stored in a ROM and/or algorithmic methods, and this is smoothed in an analogue low-pass filter.

5. Method according to one of Claims 1 to 4,

   **characterized in that**

   the sampling frequency $f_a$ is an integer multiple of the heterodyne frequency $f_{Het}$.

6. Method according to Claim 5,

   **characterized in that**

   the ratio between the sampling frequency $f_a$ and the heterodyne frequency $f_{Het}$ forms at least the factor 2.

7. Apparatus comprising a control device for a heterodyne interferometer (1) having two acousto-optical modulators (20, 30) arranged in separate light paths, a receiver (70) which provides an analogue signal (71), and a downstream A/D converter (80) for forming a digital signal (81) from the analogue signal (71), one acousto-optical modulator (20) being controlled at a modulation frequency $f_1$ and the other acousto-optical modulator (30) being controlled at another modulation frequency $f_2$, and the difference between the modulation frequencies $f_1$ and $f_2$ corresponding to a heterodyne frequency $f_{Het}$, and a sampling frequency $f_a$ being provided for converting the analogue signal (71) into the digital signal (81), the control device having a common oscillator with the fundamental frequency $f_{Quarz}$ for the purpose of generating at least two of the frequencies from the modulation frequencies $f_1$, $f_2$ and the sampling

frequency $f_a$ and having a direct digital synthesizer (DDS) for the purpose of generating the modulation frequencies $f_1$ and $f_2$ from the fundamental frequency $f_{Quarz}$, which synthesizer has a digital accumulator of the word width N, which accumulator can be incremented by an integer Z at a clock frequency $f_{Quarz}$ for each clock unit of the oscillator (100) in the form of a crystal oscillator by means of an incrementation stage, **characterized in that** a divider unit (130) is provided for generating the sampling frequency $f_a$ from the modulation frequency $f_1$, or **in that** a divider unit (140) is provided for generating the sampling frequency $f_a$ from the modulation frequency $f_2$.

8. Control device according to Claim 7,
**characterized in that**
separate DDS units (110, 120) are provided for generating the modulation frequencies $f_1$ and $f_2$.

9. Control device according to either of Claims 7 and 8,
**characterized in that**
the division ratio of the divider unit (130, 140) is an integer.

10. Apparatus according to Claim 9,
**characterized in that**
the division ratio of the divider unit (130, 140) is at least 2.

11. Use of a control device according to Claims 7 to 10 in a heterodyne interferometer (1) having two acousto-optical modulators (20, 30) arranged in separate light paths, a receiver (70) which provides an analogue signal (71), and a downstream A/D converter (80) for forming a digital signal from the analogue signal, one acousto-optical modulator (20) being controlled at the modulation frequency $f_1$ and the other acousto-optical modulator (30) being controlled at the modulation frequency $f_2$, and the difference between the modulation frequencies $f_1$ and $f_2$ corresponding to a heterodyne frequency $f_{Het}$, and a sampling frequency $f_a$ being provided for converting the analogue signal (71) into the digital signal (81).

**Revendications**

1. Procédé de commande d'un interféromètre hétérodyne (1) comportant deux modulateurs acousto-optiques (20, 30) disposés sur des chemins optiques séparés, un récepteur (70) générant un signal analogique (71), et un convertisseur A/N (80) connecté en aval qui convertit le signal analogique (71) en un signal numérique (81), dans lequel l'un des modulateurs acousto-optiques (20) est commandé avec une fréquence de modulation $f_1$ et l'autre modulateur acousto-optique (30) est commande avec une autre fréquence de modulation $f_2$, la différence entre les fréquences de modulation $f_1$ et $f_2$ forme une fréquence hétérodyne $f_{Het}$ et la conversion du signal analogique (71) en le signal numérique (81) dans le convertisseur A/N (80) est effectuée avec une fréquence d'échantillonnage $f_a$, dans lequel au moins deux des fréquences sont formées à partir des fréquences de modulation $f_1$, $f_2$ et la fréquence d'échantillonnage $f_a$ est formée à partir d'une fréquence fondamentale $f_{Quarz}$ d'un oscillateur commun (100),
**caractérisé en ce que** les fréquences de modulation $f_1$ et $f_2$ sont générées à partir de la fréquence fondamentale $f_{Quarz}$ conformément au procédé de synthèse numérique directe (DDS), consistant à incrémenter d'un nombre entier Z un accumulateur numérique ayant une largeur de mot égale à N par impulsion d'horloge de l'oscillateur (100) réalisé sous la forme d'un oscillateur à quartz ayant la fréquence fondamentale $f_{Quarz}$, dans lequel la fréquence d'échantillonnage $f_a$ destinée au convertisseur A/N (80) est formée par une unité de division (130) à partir de la fréquence de modulation $f_1$, ou la fréquence d'échantillonnage $f_a$ destinée au convertisseur A/N (80) est formée par une unité de division (120) à partir de la fréquence de modulation $f_2$.

2. Procédé selon la revendication 1,
**caractérisé en ce que** les fréquences de modulation $f_1$ et $f_2$ sont générées de manière séparée dans des unités DDS (110, 120) à partir de la fréquence fondamentale $f_{Quarz}$.

3. Procédé selon l'une quelconque des revendications 1 à 2,
**caractérisé en ce qu'**une séquence de valeurs de l'accumulateur numérique ayant une forme en dents de scie est formée par incrémentation de son contenu.

4. Procédé selon l'une quelconque des revendications 1 à 3,
**caractérisé en ce que** la séquence de valeurs contenues dans l'accumulateur numérique est interprétée en tant que valeur de phase d'une oscillation cosinus, **en ce qu'**une valeur d'échantillonnage d'une oscillation cosinus est établie à partir de la valeur de phase par l'intermédiaire d'une table stockée en ROM et/ou d'un procédé algorithmique et **en ce qu'**elle est lissée dans un filtre passe-bas analogique.

5. Procédé selon l'une quelconque des revendications 1 à 4,
**caractérisé en ce que** la fréquence d'échantillonnage $f_a$ est égale à un multiple entier de la fréquence hétérodyne $f_{Het}$.

6. Procédé selon la revendication 5,
**caractérisé en ce que** le rapport entre la fréquence d'échantillonnage $f_a$ et la fréquence hétérodyne $f_{Het}$ est au moins égal à un facteur 2.

7. Moyen comprenant un dispositif de commande d'un interféromètre hétérodyne (1) comportant deux modulateurs acousto-optiques (20, 30) disposés sur des chemins optiques séparés, un récepteur (70) qui délivre un signal analogique (71) et un convertisseur A/N (80) connecté en aval destiné à générer un signal numérique (81) à partir du signal analogique (71), dans lequel l'un des modulateurs acousto-optiques (20) est commandé avec une fréquence de modulation $f_1$ et l'autre modulateur acousto-optique (30) est commandé avec une autre fréquence de modulation $f_2$, et la différence entre les fréquences de modulation $f_1$ et $f_2$ correspond à une fréquence hétérodyne $f_{Het}$ et une fréquence d'échantillonnage $f_a$ est prévue pour la conversion du signal analogique (71) en le signal numérique (81), dans lequel le dispositif de commande comprend un oscillateur commun ayant la fréquence fondamentale $f_{Quarz}$ pour générer au moins deux des fréquences à partir des fréquences de modulation $f_1$, $f_2$ et de la fréquence d'échantillonnage $f_a$ et pour générer les fréquences de modulation $f_1$ et $f_2$ à partir de la fréquence fondamentale $f_{Quarz}$, un synthétiseur numérique direct (DDS) qui comporte un accumulateur numérique ayant une largeur de mot égale à N, qui peut être incrémenté au moyen d'un étage d'incrémentation d'un nombre entier Z par unité d'horloge de l'oscillateur (100) réalisé sous la forme d'un oscillateur à quartz ayant une fréquence d'horloge $f_{Quarz}$, **caractérisé en ce qu'**une unité de division (130) destinée à générer la fréquence d'échantillonnage $f_a$ à partir de la fréquence de modulation $f_1$ est présente et **en ce qu'**une unité de division (140) destinée à générer la fréquence d'échantillonnage $f_a$ à partir de la fréquence de modulation $f_2$ est présente.

8. Dispositif de commande selon la revendication 7,
**caractérisé en ce qu'**il est prévu des unités DDS (110, 120) pour générer les fréquences de modulation $f_1$ et $f_2$.

9. Dispositif de commande selon l'une quelconque des revendications 7 ou 8,
**caractérisée en ce que** le rapport de division de l'unité de division (130, 140) est un nombre entier.

10. Dispositif selon la revendication 9,
**caractérisée en ce que** le rapport de division de l'unité de division (130, 140) est au moins égal à 2.

11. Utilisation d'un dispositif de commande selon les revendications 7 à 10 dans un interféromètre hétérodyne (1) comportant deux modulateurs acousto-optiques (20, 30) disposés sur deux chemins optiques séparés, un récepteur (70) qui délivre un signal analogique (71) et un convertisseur A/N (80) connecté en aval destiné à générer un signal numérique à partir du signal analogique, dans lequel l'un des modulateurs acousto-optiques (20) est commandé avec la fréquence de modulation $f_1$ et l'autre modulateur acousto-optique (30) est commandé à la fréquence de modulation $f_2$, et la différence entre les fréquences de modulation $f_1$ et $f_2$ correspond à une fréquence hétérodyne $f_{Het}$, et il est prévu une fréquence d'échantillonnage $f_a$ pour la conversion du signal analogique (71) en le signal numérique (81).

**Fig. 1**

**Fig. 2**

**Fig. 3**

**EP 1 712 003 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030199115 A1